# EUROPÄISCHE PATENTSCHRIFT

(11) **EP 2 042 887 B1**
(45) Veröffentlichungstag und Bekanntmachung des Hinweises auf die Patenterteilung: **19.10.2011**
(21) Anmeldenummer: 08105144.3
(22) Anmeldetag: 27.08.2008
(51) Int. Cl.: G01S 13/86, G01S 19/00, G01S 7/40

(54) **Steuerverfahren und Vorrichtung zum automatischen Abschalten insbesondere von Nahbereichsradar**
Control method and device for automatically switching off close-range radar
Procédé de commande et dispositif d'extinction automatique, en particulier de radars de proximité

(30) Priorität: 28.09.2007 DE 102007046766
(43) Veröffentlichungstag der Anmeldung: 01.04.2009
(73) Patentinhaber: ROBERT BOSCH GMBH, 70442 Stuttgart (DE)
(72) Erfinder: Siegle, Gert, 31139 Hildesheim (DE)

(56) Entgegenhaltungen:
- DE-A1-102005 060 131
- JP-A- 2002 359 682
- US-B1- 6 201 493
- US-B1- 7 239 887

## Beschreibung

### Technisches Gebiet

Die Erfindung betrifft ein Steuerverfahren zum Steuern einer elektronisch steuerbaren Vorrichtung aufweisend ein Nahbereichsradargerät vorzugsweise in Kraftfahrzeugen insbesondere zum Aussenden elektromagnetischer Strahlen und eine solche Vorrichtung.

### Stand der Technik

Es sind elektronische Geräte bekannt, die elektromagnetische Wellen aussenden, wie beispielsweise Radargeräte. Solche Radargeräte sind unter anderem als Nahbereichsradargeräte in Kraftfahrzeugen bekannt geworden, die eingesetzt werden, um beispielsweise Hindernisse aufzuspüren, die für den Fahrer noch nicht erkennbar sind, oder um mit Seitenradar herannahende Fahrzeuge oder Hindernisse so frühzeitig zu erkennen, dass beispielsweise elektronisch gesteuert eine Gurtstraffung oder gar eine Bremsung des Fahrzeugs initiiert werden kann, bevor eine Aktion des Fahrzeugs durch den Fahrer erfolgen würde, weil er die Gefahr oder das Hindernis noch nicht erkannt hat oder nicht erkennen kann. Solche Vorrichtungen dienen daher dazu, die Sicherheit zu erhöhen, um potentielle Kollisionen frühzeitig zu erkennen und möglichst zu vermeiden - insbesondere aber deren Auswirkungen möglichst gering zu halten. Auch können solche Nahbereichsradargeräte beispielsweise mit dazu verwendet werden, teil- oder vollautomatisierte Einparkvorgänge mit zu steuern.

Solche Nahbereichsradargeräte, die im gepulsten Betrieb im 24 GHz-Bereich (21,65 - 26,65 GHz) arbeiten dürfen, werden wegen ihrer großen Bandbreite auch als Ultra-Wide-Band Radar (UWB Radar) bezeichnet. Für ihren Betrieb sind innerhalb der Europäischen Union Beschränkungen zum Betrieb beschlossen worden, wonach bis zum 30.06.2013 nur maximal 7% aller zugelassenen Fahrzeuge pro Land mit diesen so genannten Ultra-Wide-Band Radar- Geräten im 24 GHz-Bereich (21,65 - 26,65 GHz) ausgerüstet sein dürfen. Weiterhin ist beschlossen worden, dass im Frequenzbereich von 22.21-24.00 GHz in festgelegten Sicherheitszonen zum Schutz von astronomischen Stationen solche Radargeräte nicht betrieben werden dürfen. Ab 30.07.2007 müssen sich diese Geräte zum Schutz dieser Zonen darin automatisch und ohne Fahrereinfluss selbsttätig deaktivieren.

Die meisten Länder der Europäischen Union haben die vorgenannten Bestimmungen bereits umgesetzt und haben oder werden zu den Koordinaten und Ausdehnungen der Sicherheitszonen Ausführungen machen.

Für Fahrer und Fahrzeug entsteht damit die Schwierigkeit des Wissens um diese Sicherheitszone und/oder ihrer sicheren Erkennung, damit im Bereich jeder einzelnen solchen Sicherheitszone das Gerät deaktiviert werden kann. Hinzu kommt, dass in vielen Fällen die Zonen noch nicht bekannt oder nicht in der Ausdehnung definiert sind. Auch ist es vorstellbar, dass später weitere heute noch unbekannte Zonen nachdefiniert werden könnten.

Aus der Druckschrift DE 10 2005 060 131 A1 ist eine Vorrichtung zum Aussenden elektromagnetischer Strahlen bekannt, wobei ein GPS Sensor vorgesehen ist, um die Position der elektronisch steuerbaren Vorrichtung zu ermitteln. Weiterhin ist ein Steuergerät vorgesehen, das mittels des GPS Sensors die aktuelle globale Position des Kraftfahrzeugs erhält. GPS Sensoren sind zur terrestrischen Navigation bestimmt, die jedoch den sicheren Empfang eines GPS Signals voraussetzen. Der sichere Empfang ist jedoch nicht grundsätzlich sichergestellt, und es ist bekannt, dass die Signalverbindung zu meist mehreren Satelliten insbesondere regional bedingt unterbrochen sein kann. Folglich ist eine zuverlässige Abschaltung der Vorrichtung zum Aussenden elektromagnetischer Strahlen nicht grundsätzlich sichergestellt.

### Darstellung der Erfindung: Aufgabe, Lösung, Vorteile

Es ist die Aufgabe der vorliegenden Erfindung, ein Steuerverfahren und eine Vorrichtung zum Steuern einer elektronisch steuerbaren Vorrichtung zum Aussenden elektromagnetischer Strahlen zu schaffen, mittels welchem oder welcher die oben geschilderten Probleme beseitigt oder vermindert werden können.

Erfindungsgemäß wird die Aufgabe bezüglich des Steuerverfahrens gelöst durch ein Steuerverfahren nach Anspruch 1.

Auch ist es zweckmäßig, wenn die elektronisch steuerbare Vorrichtung mit einer Vorrichtung zur Positionsbestimmung verbunden ist und die Vorrichtung zur Positionsbestimmung die aktuelle Position ermittelt und bestimmt, ob die aktuelle Position in einer vordefinierten Zone liegt und der elektronisch steuerbaren Vorrichtung ein Signal zum Deaktivieren übermittelt.

Erfindungsgemäß ist vorgesehen, dass die Vorrichtung zur Positionsbestimmung eine mobilfunkgestützte Ortung umfasst: Innerhalb eines zellularen Mobilfunknetzes wie beispielsweise GSM/GPRS und/oder UMTS wird der Ort jedes Empfängers mit für den erfindungsgemäßen Zweck hinreichender Genauigkeit ermittelt und laufend verfolgt.

Weiterhin ist es erfindungsgemäß zweckmäßig, wenn eine solche Vorrichtung zur Positionsbestimmung mit der elektronisch steuerbaren Vorrichtung drahtlos oder drahtgebunden verbunden.

Erfindungsgemäß ist die Vorrichtung zur Positionsbestimmung zusätzlich verbunden mit einer normalen, vorzugsweise Galileo- oder GPSgestützten Navigations- oder -Ortungsvorrichtung und auf einer mitgeführten elektronischen Karte die Bereiche elektronisch les- und auswertbar vermerkt sind, innerhalb derer die elektronisch steuerbare Vorrichtung deaktiviert bleiben sollte oder deaktiviert werden muss. Das wird dann dadurch bewirkt, dass das Navigationsgerät innerhalb dieses Sperrbereichs ein elektronisches Steuersignal abgibt, das die elektronisch steuerbare Vorrichtung deaktiviert.

Die Definition des Sperrbereichs kann mit Vorteil entweder die direkte Entfernung zu der zu schützenden Einrichtung sein (also ein Abstand von z.B. x km) oder die Entfernung in Straßen-km (z.B. y km).

Es ist auch erfindungsgemäß vorteilhaft, wenn mit der mobilfunkgestützten Ortung ein oder mehrere Mobilfunksender ein Signal mit ausstrahlen, mit dessen Hilfe das Mobiltelefon an Bord des Fahrzeugs ein Signal erzeugt, wird, mit dem die steuerbare Vorrichtung deaktiviert wird.

Auch ist es vorteilhaft, wenn die Vorrichtung zur Positionsbestimmung, und damit die Mobilfunkvorrichtung, mit der elektronisch steuerbaren Vorrichtung drahtlos oder drahtgebunden verbunden ist oder die Vorrichtung zur Positionsbestimmung - ggf. also auch eine Mobilfunkeinrichtung - in die elektronisch steuerbare Vorrichtung integriert ist.

Weiterhin ist es zweckmäßig, wenn eine Aktivierung der elektronisch steuerbaren Vorrichtung nur durchführbar ist, wenn die Vorrichtung zur Positionsbestimmung betriebsbereit ist - also im Falle der Ortung im Mobilfunknetz in diesem angemeldet ist und - falls die Information über den Sperrbereich aus dem Navigationsgerät kommen muss - dieses sich zugleich in Betriebsfunktion befindet - d.h. sich auf der digitalen Karte "eingelogged" hat.

Die vorliegende Erfindung betrifft ferner eine elektronisch steuerbare Vorrichtung zum Aussenden elektromagnetischer Strahlen, die mit einer Vorrichtung zur Positionsbestimmung in Verbindung steht, die die kartographischen Angaben zur Definition vorbestimmter Zonen in einem Speicherelement, wie einen elektronischen Speicher und/oder einer CD-ROM und/oder einer DVD, mitführt.

Vorteilhafte Weiterbildungen sind in den Unteransprüchen beschrieben.

### Kurze Beschreibung der Zeichnungen

Nachstehend wird die Erfindung auf der Grundlage eines Ausführungsbeispiels anhand der Zeichnungen näher erläutert. Es zeigen in rein schematischer Darstellung:
- Fig. 1: ein Bockschaltbild zur Erläuterung der erfindungsgemäßen Vorrichtung; und
- Fig. 2: ein Bockschaltbild zur Erläuterung des erfindungsgemäßen Verfahrens.

### Bevorzugte Ausführung der Erfindung

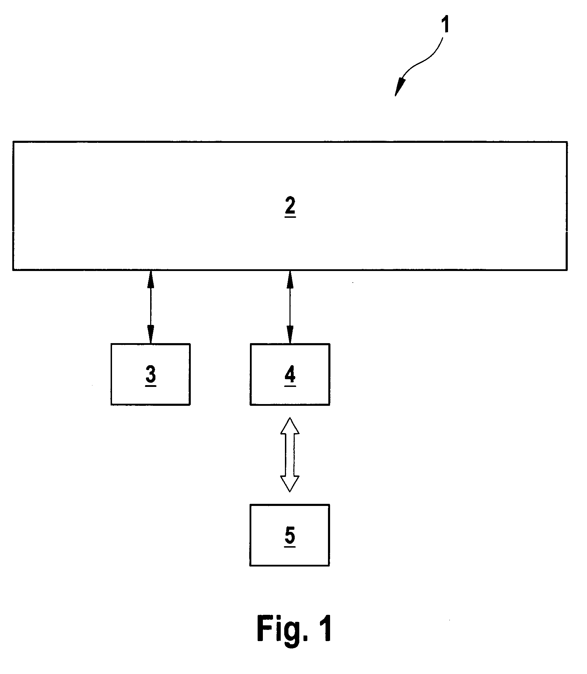

Die Figur 1 zeigt ein Blockschaltbild 1 einer elektronisch steuerbaren Vorrichtung 2 zum Aussenden elektromagnetischer Strahlen. Dazu weist die Vorrichtung ein Sendemittel 3 auf, mittels welchem gepulste elektromagnetische Strahlen, vorzugsweise Radarstrahlen, nach dem Stand der Technik zumindest ausgesandt werden und gegebenenfalls nach Reflexion an einem Gegenstand oder Hindernis auch wieder mittels eines integrierten - ggf. aber auch eines abgesetzten - Sensors wieder empfangen werden können. Aus der Laufzeit des Signals können dann Abstandsdaten ermittelt werden, die dann von der elektronisch steuerbaren Vorrichtung zur Fahrerwarnung oder zur Steuerung von weiteren Vorrichtungen beispielsweise in einem Fahrzeug herangezogen werden, wie etwa einer Vorrichtung zur Gurtstraffung oder einer Bremsanlage zum Abbremsen eines Fahrzeugs. Auch kann beispielsweise eine Lenkung ansteuerbar sein, um einen automatisierten Einparkvorgang zu ermöglichen.

Die elektromagnetischen Radarstrahlen liegen bevorzugt im Frequenzbereich von 21,65 - 26,65 GHz, es können aber auch andere Frequenzen verwendet werden.

Die Vorrichtung 2 ist weiterhin mit einer Vorrichtung zur Positionsbestimmung 4 verbunden, mittels welcher die Position der elektronisch steuerbaren Vorrichtung 2 ermittelt wird.

Gemäß der Erfindung wird ein Abschalten oder eine Deaktivierung der elektronisch steuerbaren Vorrichtung 2 bzw. der Aussendung von elektromagnetischen Strahlen bewirkt, falls sich die Vorrichtung 2 in einer vordefinierten Zone befindet. Außerhalb dieser Zone ist die Vorrichtung in der Regel aktiviert, wenn sie nicht durch den Fahrer oder Halter des Fahrzeugs gezielt ausgeschaltet ist. Dabei ist unter der Aktivierung oder Deaktivierung der Vorrichtung bevorzugt das Aktivieren oder Deaktivieren der Aussendung der elektromagnetischen Strahlung zu verstehen. Bevorzugt wird eine automatische Deaktivierung durchgeführt, wobei die Vorrichtung sich selbsttätig deaktiviert oder das Aussenden der elektromagnetischen Strahlen beendet.

Die mit der elektronisch steuerbaren Vorrichtung 2 verbundene Vorrichtung zur Positionsbestimmung 4 ermittelt automatisch bevorzugt die aktuelle Position der Vorrichtung zur Positionsbestimmung und/oder der elektronisch steuerbaren Vorrichtung 2 und übergibt der elektronisch steuerbare Vorrichtung 2 entweder ein Positionssignal, so dass die elektronisch steuerbare Vorrichtung bestimmen kann, ob die aktuelle Position in einer vordefinierten Zone liegt oder die Vorrichtung zur Positionsbestimmung 4 prüft anhand der aktuell ermittelten Position, ob die aktuelle Position in einer vordefinierten Zone liegt und gibt ein entsprechendes Signal an die elektronisch steuerbare Vorrichtung 2 weiter, so dass die elektronisch steuerbare Vorrichtung 2 sich oder die Aussendung der elektromagnetischen Strahlen deaktivieren kann. Liegt die ermittelte Position nicht in einer vordefinierten Zone, kann sich die Vorrichtung 2 oder die Aussendung der elektromagnetischen Strahlen entweder neu aktivieren (im Sinne von "einschalten") oder wieder aktivieren, wenn sie sich zuvor deaktiviert hatte.

Die Vorrichtung zur Positionsbestimmung 4 weist vorzugsweise Mittel 5 auf, die einer Navigations- oder Ortungsvorrichtung entsprechen oder sind mit einer solchen Vorrichtung verbunden. Diese Mittel 5 können als verbindbare Einheit mit der Vorrichtung 2 oder 4 ausgebildet sein, sie können aber auch in eine Vorrichtung 2 oder 4 integriert sein.

Mit Vorteil können die digitalen Karten der Navigationsgeräte die Information über und die Koordinaten der vordefinierten Zonen enthalten. Diese Angaben können aber auch in der elektronisch steuerbaren Vorrichtung 2 gespeichert sein.

Dabei können diese Mittel 5 in Funkkontakt stehen mit einer Mobilfunkserver- bzw. Mobilfunkzentralanlage, welche Positionsdaten sendet, welche die Vorrichtung 4 oder die Mittel 5 empfangen, um eine Positionsbestimmung durchzuführen. Dabei können die gesendeten Daten die Position bereits enthalten oder diese Daten werden zur Positionsbestimmung verwendet. Auch können die gesendeten Daten eine Information enthalten, ob die Vorrichtung sich in einer vordefinierten Zone befindet, in welcher ein Betrieb beispielsweise eines Radargeräts nicht erlaubt ist, so dass dieses automatisiert deaktiviert werden kann.

Insgesamt ist es vorteilhaft, wenn die Vorrichtung zur Positionsbestimmung 4, wie auch Mobilfunkvorrichtung, mit der elektronisch steuerbaren Vorrichtung 2 drahtlos oder drahtgebunden verbunden ist oder die Vorrichtung zur Positionsbestimmung 4, wie auch Mobilfunkeinrichtung, in die elektronisch steuerbare Vorrichtung 2 integriert ist.

Gemäß eines erfindungsgemäßen Ausführungsbeispiels ist eine Aktivierung der elektronisch steuerbaren Vorrichtung 2 vorteilhafterweise nur durchführbar, wenn die Vorrichtung zur Positionsbestimmung betriebsbereit ist, d.h. mit der Mobilfunkortung aktuell in einem Mobilfunknetz angemeldet ist.

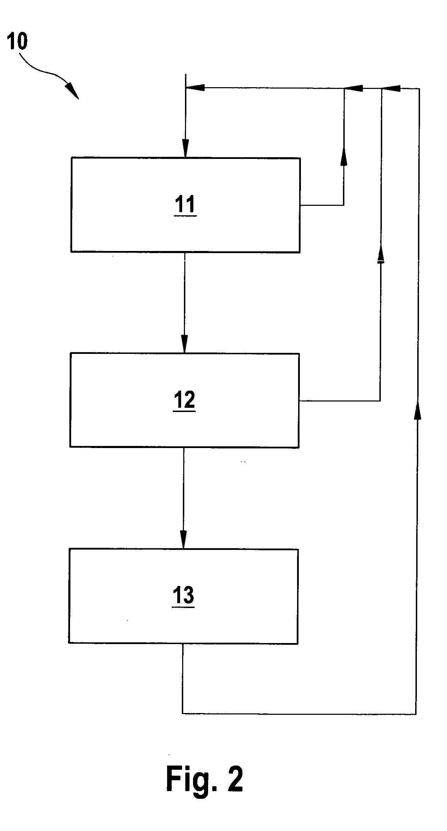

Die Figur 2 zeigt ein Blockschaltbild 10 zur Erläuterung eines Ausführungsbeispieles eines erfindungsgemäßen Verfahrens. In Block 11 wird abgefragt, ob eine Verbindung zu einer Positionsbestimmungsvorrichtung 4 vorliegt und diese aktiv ist. In Block 12 wird abgefragt, ob eine Position vorliegt, die in einer vordefinierten Zone liegt. Ist dies nicht der Fall, wird die Vorrichtung zur Aussendung von elektromagnetischer Strahlen aktiviert, siehe Block 13. Anderenfalls wird sie nicht aktiviert.

Bei einer Nutzung von Ortungsmöglichkeiten mittels Mobilfunk, beispielsweise mit GSM- oder UMTS- Technologie sind mehrere Varianten denkbar.

Besonders vorteilhaft ist es, wenn eine Vorrichtung zur Aussendung von elektromagnetischen Strahlen, wie ein Radargerät oder Nahbereichsradargerät nur dann in Funktion geht oder aktivierbar ist, wenn die Vorrichtung mit dem Mobilfunkgerät verbunden ist und wenn das Mobilfunkgerät im Mobilfunknetz aktuell angemeldet ("eingelogged") ist.

Eine Ortungsmöglichkeit über Mobilfunk gehört zum Stand der Technik und wird für jedes in einem Funknetz angemeldete GSM-Gerät automatisch durchgeführt. Ein Gesprächsaufbau ist dazu nicht nötig.

Aus der Signallaufzeit wird der Abstand des Mobiltelefons zu einer oder mehreren erreichbaren Mobilfunkstationen bzw. den Sendesegmenten der Basisstationen des Funknetzes ermittelt. Dies ist Voraussetzung dafür, dass das Mobiltelefon in einer Funkzelle überhaupt gefunden werden kann bei einem Anruf, dass der Sendepegel von Basisstation und Mobiltelefon entsprechend dem Abstand zum Sender eingestellt wird und dass der automatische Wechsel in eine andere Funkzelle funktioniert, d.h. dass eine so genannte "Hand-over-Funktion" realisierbar ist.

Der Ort eines Mobiltelefons wird damit - zunächst in der Zentrale des Mobilfunknetzes - hinreichend genau ermittelt und festgelegt. Damit kann eine Rückmeldung der Orts- bzw. Positionsinformation an das jeweilige einzelne Endgerät erfolgen. Die Auflösung der Positionsgenauigkeit ist in der Regel ausreichend, um damit auch ein Abschalten von Nahbereichsradar-Geräten in der Nähe einer vordefinierten Zone, wie beispielsweise um eine radioastronomische Einrichtung auslösen zu können.

Neben der Übersendung der Positionsinformation kann die Basisstation auch eine Abschaltinformation an das Endgerät senden, so dass eine Abschaltung durchgeführt wird. Ein Abschaltsignal kann auch als Zusatzdienst von einem Sender, wie beispielsweise einem GSM-Sender, mit abgestrahlt werden oder beispielsweise als Nachrichtensignal wie beispielsweise als SMS-Signal gesendet werden.

Die Ortungsinformation kann auch als Zusatzdienst vom Sender, wie beispielsweise GSM-Sender, an das Mobilfunkgerät gesendet werden. Im Fahrzeug kann dann der Abstand zu den beispielsweise in der Vorrichtung 2 oder 4 ggf. im Fahrzeug gespeicherten Orten der relevanten vordefinierten Zonen, beispielsweise von radioastronomischen Einrichtungen, berechnet und daraus ein Abschaltsignal generiert werden, falls ein vorgegebener Mindestabstand unterschritten ist.

Die oben beschriebene Lösung kann vorteilhaft sein, wenn eine Ortungsinformation als regulärer verfügbarer Dienst zur Verfügung steht und damit zur Unterstützung von Navigationsgeräten eingesetzt werden kann.

Dann kann entweder ein Navigationsgerät oder ein Ortungsgerät durch einen Zusatz ertüchtigt werden, ein Abschaltsignal zu erzeugen, mit dem das Nahbereichsradar-Gerät bzw. die Vorrichtung 2 zum Aussenden von elektromagnetischen Strahlen abgeschaltet werden kann und/oder so lange ein Abschaltsignal ansteht, auch das Radargerät abgeschaltet bleibt, Auch können andere Signalverläufe wie beispielsweise wiederholte Einzelimpulse o.ä. realisiert werden.

Auch kann das Nahbereichsradar-Gerät oder die Vorrichtung 2 zum Aussenden von elektromagnetischen Strahlen selbst einen GSM-Empfänger aufweisen, der diese Abschaltfunktion bewirkt.

Weiterhin kann auch in ein kartengestütztes Mautgerät mit einem GSM-Gerätezusatz eine entsprechende Zusatzfunktion mit eingebaut werden.

Gemäß eines weiteren Erfindungsgedankens kann erreicht werden, dass bei fehlender Positionsinformation - z.B. bei ausgeschalteten Mobiltelefon - die Vorrichtung zum Aussenden von elektromagnetischen Strahlen oder das Nahbereichsradar automatisch abgeschaltet wird oder abgeschaltet bleibt. Eine automatisierte Einschaltung bzw. Aktivierung nach Vorliegen der Positionsinformationen kann vorgesehen werden.

Vorteilhaft ist in jedem Falle eine Fahrerinformation bei einem Statuswechsel von aktiviert zu deaktiviert bzw. umgekehrt.

## Patentansprüche

1. Steuerverfahren zum Steuern einer elektronisch steuerbaren Vorrichtung (2) aufweisend ein Nahbereichsradargerät zum Aussenden elektromagnetischer Strahlen, die mit einer Vorrichtung zur Positionsbestimmung (4) verbunden ist, bei welchem die kartographische Position der elektronisch steuerbaren Vorrichtung (2) ermittelt wird, eine Aktivierung der elektronisch steuerbaren Vorrichtung (2) nur durchführbar ist, wenn die Vorrichtung im Mobilfunknetz angemeldet ist, und dass im Falle, dass die Vorrichtung sich in einer vordefinierten Zone befindet, die Vorrichtung automatisch deaktiviert wird oder sich selbsttätig deaktiviert, wobei
die Vorrichtung zur Positionsbestimmung (4) in die elektronisch steuerbare Vorrichtung integrierbar ist und
- die Vorrichtung zur Positionsbestimmung (4) der elektronisch steuerbaren Vorrichtung (2) die aktuellen Positionsdaten übergibt und die elektronisch steuerbare Vorrichtung bestimmt, ob die aktuelle Position in einer vordefinierten Zone liegt, und
- eine mobilfunkgestützte Ortung basierend auf einem zellularen Mobilfunknetz und
- eine satellitengestützte Navigations- oder Ortungsvorrichtung umfasst.

2. Steuerverfahren nach Anspruch 1, **dadurch gekennzeichnet, dass** die elektronisch steuerbare Vorrichtung (2) mit einer Vorrichtung zur Positionsbestimmung (4) verbunden ist und die Vorrichtung zur Positionsbestimmung (4) die aktuelle Position ermittelt und bestimmt, ob die aktuelle Position in einer vordefinierten Zone liegt und der elektronisch steuerbaren Vorrichtung ein Signal zum Deaktivieren übermittelt.

3. Steuerverfahren nach einem der vorhergehenden Ansprüche, **dadurch gekennzeichnet, dass** die satellitengestützte Navigations- oder Ortungsvorrichtung eine Galileo- oder GPS- gestützte Navigations- oder Ortungsvorrichtung ist.

4. Steuerverfahren nach Anspruch 4, **dadurch gekennzeichnet, dass** eine Vorrichtung zur Positionsbestimmung (4), wie auch Mobilfunkvorrichtung, mit der elektronisch steuerbaren Vorrichtung drahtlos oder drahtgebunden verbunden ist.

## Claims

1. Control method for controlling an electronically controllable apparatus (2) having a short-range radar appliance for emitting electromagnetic rays which is connected to an apparatus for position-finding (4), in which the cartographic position of the electronically controllable apparatus (2) is ascertained, the electronically controllable apparatus (2) can be activated only when the apparatus is registered in the mobile radio network, and if the apparatus is situated in a predefined zone then the apparatus is automatically deactivated or independently deactivates itself, wherein
the apparatus for position-finding (4) can be integrated into the electronically controllable apparatus and
- the apparatus for position-finding (4) transfers to the electronically controllable apparatus (2) the current position data and the electronically controllable apparatus determines whether the current position is situated in a predefined zone, and comprises
- mobile-radio-assisted localization on the basis of a cellular mobile radio network and
- a satellite-assisted navigation or localization apparatus.

2. Control method according to Claim 1, **characterized in that** the electronically controllable apparatus (2) is connected to an apparatus for position-finding (4) and the apparatus for position-finding (4) ascertains the current position and determines whether the current position is situated in a predefined zone and sends the electronically controllable apparatus a signal for deactivation.

3. Control method according to one of the preceding claims, **characterized in that** the satellite-assisted navigation or localization apparatus is a Galileo-assisted or GPS-assisted navigation or localization apparatus.

4. Control method according to Claim 4, **characterized in that** an apparatus for position-finding (4), as well as a mobile radio apparatus, is connected to the electronically controllable apparatus wirelessly or by wire.

## Revendications

1. Procédé de commande pour commander un dispositif à commande électronique (2) présentant un appareil radar de zone de proximité pour émettre un rayonnement électromagnétique, lequel est relié avec un dispositif de détermination de la position (4), avec lequel la position cartographique du dispositif à commande électronique (2) est déterminée, une activation du dispositif à commande électronique (2) ne pouvant être effectuée que lorsque le dispositif est enregistré dans un réseau de radiocommunication mobile et, dans le cas où le dispositif se trouve dans une zone prédéfinie, le dispositif est désactivé automatiquement ou se désactive automatiquement, le dispositif de détermination de la position (4) pouvant être intégré dans le dispositif à commande électronique et
- le dispositif de détermination de la position (4) transférant les données de position actuelle au dispositif à commande électronique (2) et le dispositif à commande électronique déterminant si la position actuelle se trouve dans une zone prédéfinie et comprenant
- une localisation assistée par radiocommunication mobile basée sur un réseau de radiocommunication mobile et
- un dispositif de navigation ou de localisation assistée par satellite.

2. Procédé de commande selon la revendication 1, **caractérisé en ce que** le dispositif à commande électronique (2) est relié avec un dispositif de détermination de la position (4) et le dispositif de détermination de la position (4) détermine la position actuelle et définit si la position actuelle se trouve dans une zone prédéfinie et communique un signal de désactivation au dispositif à commande électronique.

3. Procédé de commande selon l'une des revendications précédentes, **caractérisé en ce que** le dispositif de navigation ou de localisation assistée par satellite est un dispositif de navigation ou de localisation assistée par Galileo ou GPS.

4. Procédé de commande selon la revendication 3, **caractérisé en ce qu'**un dispositif de détermination de la position (4) ainsi qu'un dispositif de radiocommunication mobile sont reliés sans fil ou de manière filaire avec le dispositif à commande électronique.
